# EUROPÄISCHE PATENTSCHRIFT

(11) **EP 3 014 164 B1**
(45) Veröffentlichungstag und Bekanntmachung des Hinweises auf die Patenterteilung: **13.03.2019**
(21) Anmeldenummer: 14744472.3
(22) Anmeldetag: 26.06.2014
(51) Int. Cl.: F16L 55/28, F16L 55/18, F16L 55/26

(54) **KANALSANIERUNGSVERFAHREN**
SEWER REHABILITATION METHOD
PROCÉDÉ DE RÉNOVATION DE CANALISATIONS

(30) Priorität: 26.06.2013 DE 102013010584
(43) Veröffentlichungstag der Anmeldung: 04.05.2016
(73) Patentinhaber: I.S.T. Innovative Sewer Technologies GmbH, 44795 Bochum (DE)
(72) Erfinder: NIEDING, Tim, 36251 Bad Hersfeld (DE); VOGT, Jörg, 44879 Bochum (DE)
(74) Vertreter: Schneiders, Josef
(86) Internationale Anmeldenummer: PCT/EP2014/063496
(87) Internationale Veröffentlichungsnummer: WO 2014/207092

(56) Entgegenhaltungen:
- EP-A1- 2 287 510
- EP-A2- 1 070 905
- WO-A1-2012/016322
- DE-A1- 3 730 315
- DE-A1- 19 819 406
- GB-A- 2 147 682
- US-A- 5 018 545

## Beschreibung

Die Erfindung betrifft ein Kanalsanierungsverfahren, wobei
- ein Sanierungswerkzeug mittels eines in einer Hauptleitung eines Abwasserkanalsystems verfahrbaren Roboters in eine in die Hauptleitung einmündende Hausanschlussleitung eingebracht wird,
- mittels des Sanierungswerkzeugs Sanierungsarbeiten in der Hausanschlussleitung durchgeführt werden, und
- das Sanierungswerkzeug nach Abschluss der Sanierungsarbeiten mittels des Roboters aus der Hausanschlussleitung wieder entfernt wird.

Außerdem betrifft die Erfindung ein Kanalsanierungssystem mit einem in einer Hauptleitung eines Abwasserkanalsystems verfahrbaren Roboter und einem in eine Hausanschlussleitung einführbaren Sanierungswerkzeug.

Unter dem Begriff Kanalsanierung versteht man Verfahren, Techniken und Maßnahmen zur Wiederherstellung oder Verbesserung von vorhandenen Abwasserkanalsystemen. Abwasserkanäle müssen so geplant, gebaut, unterhalten und betrieben werden, dass der bauliche Zustand über die Nutzungsdauer aufrechterhalten wird. Mit der Kanalsanierung wird die Funktionstüchtigkeit eines Abwasserkanalsystems wiederhergestellt und die Nutzungsdauer verlängert. Kanalsanierungsverfahren umfassen Reparatur-, Renovierungs- und Erneuerungsverfahren.

Zum Sanieren von Hausanschlussleitungen werden herkömmlich von einem Hausrevisionsschacht aus geeignete Sanierungswerkzeuge, zum Beispiel ein Fräswerkzeug und/oder ein Auskleidungswerkzeug, das eine schadhafte Stelle mittels eines so genannten Schlauchliners überbrückt, eingebracht. Diese Vorgehensweise hat den Nachteil, dass das betreffende Privatgrundstück betreten werden muss, und zwar obwohl in vielen Fällen die Hausanschlussleitung bis zum Gebäude in die Sanierungskompetenz der Gemeinde fällt.

Die EP 1 070 905 A2 offenbart eine Vorrichtung zum Durchführen von Kanalarbeiten, wobei ein Werkzeug über eine biegsame Hülse mit einem Geräteträger verbunden ist.

In der GB 2 147 682 A ist eine Robotereinheit für den Einsatz in unterirdischen Leitungen beschrieben, mit einem Greifarm, der relativ zum Körper der Robotereinheit drehbar ist.

Aus der DE 198 19 406 A1 ist eine Vorrichtung zum Spülen von Kanälen bekannt, mit einem an einem Fahrwagen angeordneten Spülschlauch, der in einen Hausanschlusskanal eingeführt werden kann.

Die WO 2012/016322 A1 beschreibt ein Kanalsanierungssystem mit einer Mehrzahl von Werkzeugen, wobei die Werkzeuge an Kabeln oder Schläuchen angeordnet sind.

Die DE 37 30 315 A1 offenbart ein Verfahren und eine Vorrichtung zum Sanieren eines Kanalrohrs, wobei eine Absperrblase durch einen schwenkbaren Greifer in einen Einlauf bewegt, aufgeblasen und gesichert wird.

Aus der US 5 018 545 A eine Vorrichtung zum Reinigung von Kanälen bekannt, wobei eine Reinigungsdüse über einen Schlauch an einem Körper angeordnet ist.

Die EP 2 287 510 A1 beschreibt ein System zur dauerhaften Verschließung einer Zweigleitung.

Aus der DE 103 11 828 A1 ist ein Kanalsanierungsverfahren bekannt, bei dem eine geeignete Sanierungsvorrichtung von einer Hauptleitung aus mittels einer durch die Hauptleitung zum Abzweig der betreffenden Hausanschlussleitung verfahrbaren Vorrichtung eingebracht wird. Hierzu weist die verfahrbare Vorrichtung einen Umlenkkanal auf. Die Vorrichtung ist im Bereich des Abzweigs in der Hauptleitung festsetzbar. Durch den Umlenkkanal können Sanierungswerkzeuge, Sanierungsmaterial und dergleichen von der Hauptleitung her in die Hausanschlussleitung eingebracht werden, um dort erforderliche Sanierungsarbeiten durchzuführen. Wesentlich ist bei dem vorbekannten Kanalsanierungsverfahren, dass die verfahrbare Vorrichtung ein Gehäuse mit einem aufblasbaren Packer aufweist, mittels dem der Übergang zwischen Umlenkkanal und Abzweig der Hausanschlussleitung abdichtbar und die verfahrbare Vorrichtung festsetzbar ist.

Die genannte Druckschrift lässt offen, wie genau das Sanierungswerkzeug durch den Umlenkkanal der verfahrbaren Vorrichtung in die Hausanschlussleitung eingebracht wird. Nachteilig ist bei dem vorbekannten Kanalsanierungsverfahren, dass eine spezielle Vorrichtung, nämlich die verfahrbare Vorrichtung mit Packer und Umlenkkanal, benötigt wird. Dies bedeutet einen Mehraufwand und entsprechend erhöhte Kosten.

Aufgabe der Erfindung ist vor diesem Hintergrund, ein praktikables und kostengünstiges Kanalsanierungsverfahren und ein entsprechendes System bereitzustellen, die es ermöglichen, eine Kanalsanierung in einer Hausanschlussleitung von einer Hauptleitung her durchzuführen.

Diese Aufgabe löst die Erfindung ausgehend von einem Kanalsanierungsverfahren der eingangs angegebenen Art dadurch, dass der Roboter ein fernsteuerbares Greiforgan zur Aufnahme des Sanierungswerkzeugs aufweist, wobei der Roboter und das Sanierungswerkzeug über separate Kabel von über Tage her mit Energie versorgt und ferngesteuert werden, wobei der Roboter
- das Sanierungswerkzeug durch das fernsteuerbare Greiforgan aufnimmt und durch die Hauptleitung bis zur Einmündung der Hausanschlussleitung transportiert,
- das Sanierungswerkzeug in die Hausanschlussleitung einführt und dort absetzt,
- das Sanierungswerkzeug in der Hausanschlussleitung zu einer schadhaften Stelle vorschiebt, indem er nach dem Absetzen des Sanierungswerkzeugs in der Hauptleitung zurückfährt, dann das Kabel des Sanierungswerkzeugs ergreift und schließlich in der Hauptleitung wieder vorfährt, und
- das Sanierungswerkzeug nach Abschluss der Fräsarbeiten aus der Hausanschlussleitung zurückzieht und wieder aufnimmt.

Kerngedanke der Erfindung ist es somit, den im Abwasserkanalsystems verfahrbaren Roboter zu verwenden, um das Sanierungswerkzeug aufzunehmen, es, zum Beispiel von einem Schacht der Hauptleitung aus, durch die Hauptleitung bis zur Einmündung der Hausanschlussleitung zu verbringen. Außerdem führt der Roboter das Sanierungswerkzeug in die Hausanschlussleitung ein und setzt es dort ab. Des Weiteren schiebt der Roboter gemäß der Erfindung das Sanierungswerkzeug in der Hausanschlussleitung zu der von dem Sanierungswerkzeug zu bearbeitenden schadhaften Stelle vor. Schließlich zieht der Roboter das Sanierungswerkzeug nach Abschluss der Sanierungsarbeiten aus der Hausanschlussleitung wieder zurück und nimmt es auf.

Als verfahrbarer Roboter im Sinne der Erfindung eignet sich ein Kanalsanierungsroboter an sich bekannter Bauart und Funktion. Bekannt sind Kanalsanierungsroboter die auf Rädern, die mittels eines elektrischen, pneumatischen oder hydraulischen Motors angetrieben werden, in einem Abwasserkanal verfahrbar sind. Solche Kanalsanierungsroboter werden über ein Kabel von über Tage her mit Energie versorgt und ferngesteuert. Sie weisen ein elektrisch, pneumatisch oder hydraulisch angetriebenes Sanierungsgerät, beispielsweise einen Fräskopf, auf, mit dem die Sanierungsarbeiten fernüberwacht und ferngesteuert durchgeführt werden. Zur Fernüberwachung ist typischerweise eine in den Kanalsanierungsroboter integrierte Videokamera vorgesehen.

Ein solcher Kanalsanierungsroboter kommt erfindungsgemäß zum Einsatz, indem das Sanierungsgerät durch ein fernsteuerbares Greiforgan ersetzt wird, das seinerseits das von dem Roboter unabhängige Sanierungswerkzeug aufnimmt, das dann mittels des Roboters in die Hausanschlussleitung eingeführt und dort abgesetzt wird. Somit kann ein herkömmlicher Kanalsanierungsroboter mit geringem Aufwand für die erfindungsgemäße Verwendung angepasst werden.

Als Sanierungswerkzeug für den erfindungsgemäßen Einsatz eignet sich ein aus dem Stand der Technik bekannter und kommerziell verfügbarer Fräsroboter, der konventionell zur Durchführung von Fräsarbeiten vom Hausrevisionsschacht her eingesetzt wird. Ein solcher Fräsroboter kann ohne irgendwelche Modifikationen oder Anpassungen erfindungsgemäß verwendet werden. Ebenso kann das Sanierungswerkzeug ein an sich bekanntes und kommerziell erhältliches Auskleidungswerkzeug zur Einbringung eines Schlauchliners sein.

Ein wesentlicher Vorteil des erfindungsgemäßen Kanalsanierungsverfahrens ist somit, dass vorhandene, bewährte und kostengünstig am Markt erhältliche Vorrichtungen verwendet werden können, die nur geringfügig angepasst werden müssen. Soweit beispielsweise ein herkömmlicher Kanalsanierungsroboter und ein Fräsroboter bereits vorhanden sind, muss lediglich der Kanalsanierungsroboter umgerüstet werden, so dass er den Fräsroboter aufnehmen kann. Somit kann das erfindungsgemäße Kanalsanierungsverfahren, das die Durchführung der Sanierungsarbeiten in der Hausanschlussleitung von der Hauptleitung her ermöglicht, zu denkbar geringen Kosten verfügbar gemacht und angewendet werden.

Bevorzugt führt der Roboter das Sanierungswerkzeug wenigstens 50 cm weit, weiter vorzugsweise wenigstens 1 m weit, besonders bevorzugt wenigstens 2 m weit in die Hausanschlussleitung ein, bevor er es dort absetzt. Der Roboter sollte das Sanierungswerkzeug zumindest soweit in die Hausanschlussleitung einführen, dass es aus dieser nicht wieder in die Hauptleitung fällt. Das fernsteuerbare Greiforgan des Roboters sollte entsprechend dimensioniert sein.

Bei einer erfindungsgemäßen Ausgestaltung werden der Roboter und das Sanierungswerkzeug über separate Kabel von über Tage her mit Energie versorgt und ferngesteuert. Wie bereits erwähnt, ist es bei Kanalsanierungsrobotern herkömmlicher Bauart üblich, dass diese über Kabel mit Energie versorgt und ferngesteuert werden. Unter einem Kabel ist in diesem Sinne jede Art der flexiblen Verbindung zu verstehen, die Energie und Fernsteuersignale überträgt. Typischerweise sind in dem Kabel mehrere Leitungen, nämlich mehradrige elektrische Leitungen sowie gegebenenfalls Druckluftleitungen (falls pneumatische Antriebe zum Einsatz kommen) oder Hydraulikleitungen (falls hydraulische Antriebe zum Einsatz kommen) zusammengefasst. Wie zuvor erwähnt, kann gemäß der Erfindung ein (modifizierter) herkömmlicher Kanalsanierungsroboter in Kombination mit einem herkömmlichen Fräsroboter zum Einsatz kommen. Herkömmliche Kanalsanierungsroboter und Fräsroboter weisen jeweils eine individuelle Kabelverbindung zu einem über Tage befindlichen Energieversorgungs- und Fernsteuerungsgerät auf.

Bei der erfindungsgemäßen Ausgestaltung des Kanalsanierungsverfahren schiebt der Roboter das Sanierungswerkzeug in der Hausanschlussleitung bis zu der zu sanierenden schadhaften Stelle vor, indem er nach dem Absetzen des Sanierungswerkzeugs in der Hauptleitung zurückfährt, dann das Kabel des Sanierungswerkzeugs ergreift und schließlich in der Hauptleitung wieder vorfährt. Dieses Procedere kann mehrfach wiederholt werden, je nachdem wie weit das Sanierungswerkzeug in der Hausanschlussleitung vorzuschieben ist. Beim Zurückfahren wird das Kabel des Sanierungswerkzeugs von dem Roboter losgelassen. Beim Vorfahren wird das Kabel des Sanierungswerkzeugs jeweils ergriffen, um über das (entsprechend biegesteife) Kabel den Schub beim Vorfahren des Roboters auf das Sanierungswerkzeug zu übertragen. Zum Ergreifen des Kabels des Sanierungswerkzeugs kann das oben erwähnte fernsteuerbare Greiforgan des Roboters verwendet werden. Andere Arten der lösbaren Fixierung des Kabels am Roboter sind denkbar.

Die Aufgabe der Erfindung wird weiterhin durch ein Kanalsanierungssystem gelöst, das einen in einer Hauptleitung eines Abwasserkanalsystems verfahrbaren Roboter und ein in eine Hausanschlussleitung einführbares Sanierungswerkzeug umfasst. Gemäß der Erfindung weist der Roboter ein fernsteuerbares Greiforgan auf, mit dem das Sanierungswerkzeug ergreifbar ist, wobei ein Kabel des Sanierungswerkzeugs durch das fernsteuerbare Greiforgan ergreifbar ist, wobei dass das Kabel des Sanierungswerkzeugs biegesteif ist und einen von dem Roboter auf das Kabel ausgeübten Schub auf das Sanierungswerkzeug überträgt. Das Kanalsanierungssystem eignet sich zur Durchführung des oben beschriebenen erfindungsgemäßen Kanalsanierungsverfahrens.

Bevorzugt sind, wie oben erwähnt, der Roboter und das Sanierungswerkzeug über separate Kabel mit Energie versorgbar und fernsteuerbar.

Erfindungsgemäß kann nicht nur das Sanierungswerkzeug, sondern auch ein Kabel des Sanierungswerkzeugs durch das fernsteuerbare Greiforgan ergreifbar sein. Dies hat den Vorteil, dass das Greiforgan einerseits zum Transportieren des Sanierungswerkzeugs durch die Hauptleitung bis zur in die Hauptleitung einmündenden Hausanschlussleitung verwendet werden kann, und andererseits zum Vorschieben des Sanierungswerkzeugs in der Hausanschlussleitung, indem, wie oben beschrieben, der Roboter das Kabel des Sanierungswerkzeugs ergreift und durch Vorfahren in der Hauptleitung Schub über das biegesteife Kabel auf das Sanierungswerkzeug überträgt.

Bei einer bevorzugten Ausgestaltung des erfindungsgemäßen Kanalsanierungssystems ist eine Kabelführung vorgesehen, die das Kabel des Sanierungswerkzeugs an dem Roboter führt. Die Kabelführung stellt sicher, dass das Kabel des Sanierungswerkzeugs nicht beschädigt wird, beispielsweise weil es mit Antriebsrädern des Roboters in Kontakt kommt. Außerdem sorgt die Kabelführung dafür, dass das Kabel des Sanierungswerkzeugs zuverlässig von dem Greiforgan des Roboters zum Vorschieben des Sanierungswerkzeugs in der Hausanschlussleitung gegriffen werden kann.

Erfindungsgemäß weist das Greiforgan des Roboters einen Klauengreifer auf, mit aufeinander zu und voneinander weg beweglichen Greifklauen. Ein Klauengreifer ist geeignet, unterschiedlichste Gegenstände mit unterschiedlichsten Abmessungen zu greifen. Somit ist ein Klauengreifer besonders flexibel einsetzbar. Insbesondere eignet sich der Klauengreifer gut, einerseits das Sanierungswerkzeug zu greifen, um es gemäß der Erfindung bis zur Einmündung der Hausanschlussleitung zu transportieren und in die Hausanschlussleitung einzuführen, und andererseits das Kabel des Sanierungswerkzeugs zu greifen, um dieses in der Hausanschlussleitung vorzuschieben. Erfindungsgemäß weist der Klauengreifer zwei ineinander verschränkbare Gruppen von Greifklauen auf, wobei wenigstens eine der Gruppen wenigstens zwei Greifklauen umfasst. Bevorzugt weisen beide Gruppen zwei (oder mehr) Greifklauen auf, die zueinander versetzt angeordnet sind, so dass sie sich im verschränkten Zustand, in einer Richtung senkrecht zur Bewegungsebene der Greifklauen gesehen, zumindest teilweise überlappen. Die ineinander verschränkbaren Gruppen von Greifklauen haben den Vorteil, dass sich damit Gegenstände mit deutlich unterschiedlichem Durchmesser zuverlässig mit hinreichend großer Greifkraft greifen lassen. Einerseits kann das Sanierungswerkzeug zuverlässig gehalten werden. Andererseits kann das Kabel des Sanierungswerkzeugs ausreichend fest ergriffen werden, so dass der zum Vorschieben des Sanierungswerkzeugs in der Hausanschlussleitung erforderliche Schub von dem Roboter auf das Kabel übertragen werden kann.

Ausführungsbeispiele der Erfindung werden im Folgenden anhand der Zeichnungen näher erläutert. Es zeigen:
- Figuren 1a-1c:: schematische Darstellung des erfindungsgemäßen Verfahrens;
- Figur 2:: schematische Darstellung des erfindungsgemäßen Kanalsanierungssystems mit verfahrbarem Roboter und Fräswerkzeug;
- Figur 3:: Greiforgan des erfindungsgemäßen Roboters.

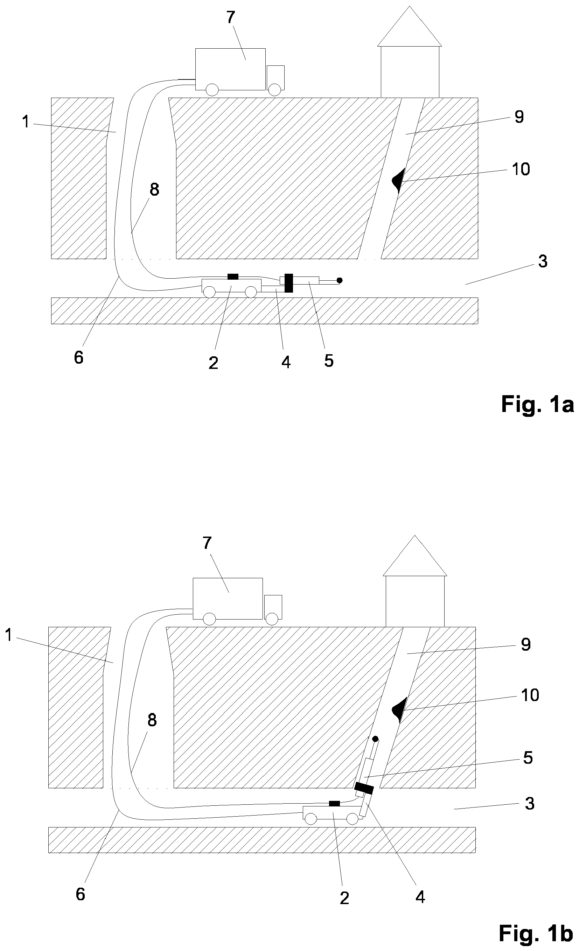

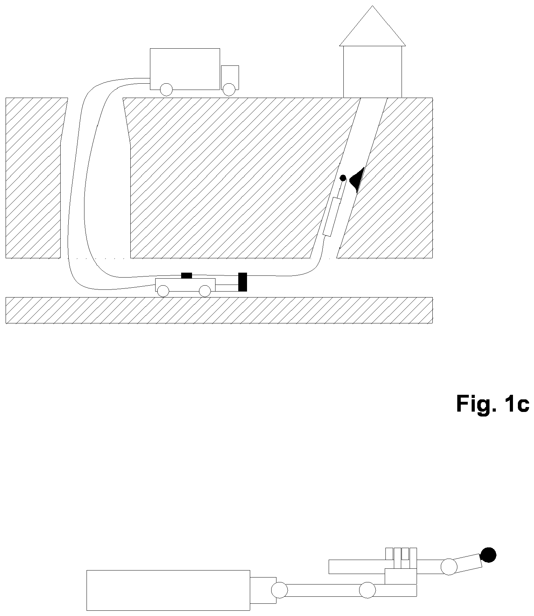

Die Figuren 1a bis 1c illustrieren schematisch das erfindungsgemäße Kanalsanierungsverfahren. Über einen Schacht 1 wird ein Roboter 2 in eine Hauptleitung 3 eines Abwasserkanalsystems eingebracht. Der Roboter 2 weist ein Greiforgan 4 auf, dessen Ausgestaltung im Einzelnen weiter unten näher beschrieben wird. Mittels des Greiforgans 4 hält der Roboter 2 ein Fräswerkzeug 5. Der Roboter 2 ist über ein Kabel 6 mit einem über Tage befindlichen Fahrzeug 7 verbunden. Das Fahrzeug 7 weist Einrichtungen zur Fernbedienung und zur Energieversorgung des Roboters 2 auf. Über ein von dem Kabel 6 separates Kabel 8 ist das Fräswerkzeug 5 mit dem Fahrzeug 7 verbunden, so dass auch die Energieversorgung und Fernbedienung des Fräswerkzeugs 5 von dem Fahrzeug 7 aus erfolgen. Der Roboter 2 ist über motorisch angetriebene Räder in der Hauptleitung 3 verfahrbar und transportiert das Fräswerkzeug 5 durch die Hauptleitung 3 zu einer in die Hauptleitung 3 einmündenden Hausanschlussleitung 9. Wie in der Figur 1b dargestellt, führt der Roboter 2 mittels seines Greiforgans 4 das Fräswerkzeug 5 in die Hausanschlussleitung 9 ein und setzt es dort ab. Das bedeutet, dass das Greiforgan 4 des Roboters 2 das Fräswerkzeug 5 in der Hausanschlussleitung 9 freigibt. Nachdem der Roboter 2 das Fräswerkzeug 5 in der Hausanschlussleitung 9 abgesetzt hat, fährt er in der Hauptleitung 3 zurück. Dann ergreift er das Kabel 8 des Fräswerkzeugs 5 und fährt in der Hauptleitung 3 wieder vor. Über das biegesteife Kabel 8 wird dabei Schub auf das Fräswerkzeug 5 übertragen, so dass es in der Hausanschlussleitung 9 bis zu einer zu bearbeitenden schadhaften Stelle 10 vorgeschoben wird. An der schadhaften Stelle 10 angekommen führt das Fräswerkzeug 5, ferngesteuert vom Fahrzeug 7 aus, die zur Sanierung erforderlichen Fräsarbeiten durch. Hierzu weist das Fräswerkzeug 5, wie auch der Roboter 2, eine Videokamera auf (nicht dargestellt). Über die Videokameras des Roboters 2 und des Fräswerkzeugs 5 können die Bewegungen des Roboters 2 in der Hauptleitung 3 und die Bewegungen des Fräswerkzeugs 5 in der Hausanschlussleitung 9 vom Fahrzeug 7 aus überwacht werden, um den Roboter 2 und das Fräswerkzeug 5 unabhängig voneinander fern zu bedienen. Nach Abschluss der Fräsarbeiten zieht der Roboter 2 das Fräswerkzeug 5 aus der Hausanschlussleitung 9 bis zur Einmündung der Hausanschlussleitung 9 in den Hauptkanal 3 zurück (nicht dargestellt), bis der Roboter 2 das Fräswerkzeug 5 mittels seines Greiforgans 4 wieder aufnehmen kann. Danach transportiert der Roboter 2 das Fräswerkzeug 5 zurück zum Schacht 1, wo es zusammen mit dem Roboter 2 aus dem Kanalsystem entnommen werden kann.

Die Figur 2 zeigt das erfindungsgemäße Kanalsanierungssystem detaillierter Das System umfasst den im Hauptkanal 3 über motorisch (z.B. pneumatisch) angetriebene Räder 11 verfahrbaren Roboter 2. Der Roboter 2 weist an seiner Vorderseite einen motorisch um die Achse M drehbaren Lagerbock 12 auf. An dem Lagerbock 12 ist ein um eine Achse 13 motorisch verschwenkbarer Ausleger 14 angeordnet. Am Ende des Auslegers 14 ist ein um eine weitere Achse 15 motorisch verschwenkbarer Klauengreifer 16 angeordnet. Der Klauengreifer 16 hält, wie in der Figur 2 dargestellt, das Fräswerkzeug 5. Der Lagerbock 12 mit dem Ausleger 14, den Schwenkachsen 13 und 15 und dem Klauengreifer 16 bilden das Greiforgan 4 des Roboters 2. Der Ausleger 14 ist hinreichend dimensioniert, so dass das Fräswerkzeug 5 von dem Roboter 2 wenigstens 50 cm, besser wenigstens 1 m weit in die Hausanschlussleitung 9 eingeführt werden kann, bevor es dort abgesetzt wird. Ansonsten besteht die Gefahr, dass das Fräswerkzeug 5 nach dem Absetzen in die Hauptleitung 3 herausfällt. Durch die Drehbarkeit des Lagerbocks 12 und die Verschwenkbarkeit um die beiden Achsen 13 und 15 ergibt sich eine hohe Beweglichkeit des Greiforgans 4, so dass das Fräswerkzeug 5 in die Hausanschlussleitung 9 zuverlässig eingesetzt werden kann, und zwar bei praktisch jeder in der Praxis auftretenden Geometrie der Einmündung der Hausanschlussleitung 9 in die Hauptleitung 3. An dem Gehäuse des Roboters 2 sind Kabelführungen 17 vorgesehen, die das Kabel 8 des Fräswerkzeugs 5 an dem Roboter 2 führen. Die Kabelführungen 17 stellen sicher, dass das Kabel 8 nicht in Kontakt mit den Rädern 11 des Roboters 2 kommt, wodurch es beschädigt werden könnte. Weiterhin sorgt die Kabelführung 17 dafür, dass das Kabel 8 zum Vorschieben des Fräswerkzeugs 5 in der Hausanschlussleitung 9 von dem Klauengreifer 16 sicher ergriffen werden kann.

Die Figur 3 zeigt eine Ansicht des Klauengreifers 16. Der Klauengreifer 16 weist aufeinander zu und voneinander weg bewegliche Greifklauen 18, 19 auf. Die Greifklauen 18 und 19 bilden jeweils eine Gruppe von ineinander verschränkbaren Greifklauen. Die Figur 3 zeigt die Greifklauen 18, 19 im verschränkten Zustand, in dem die Greifklauen einander teilweise überlappen. Zur Bewegung aufeinander zu und voneinander weg sind die Greifklauen 18 um eine Schwenkachse 20 und die Greifklauen 19 um eine Schwenkachse 21 verschwenkbar. Aufgrund der Verschränkbarkeit der Greifklauen 18, 19 ineinander können Gegenstände mit stark unterschiedlichem Durchmesser ergriffen werden. Dies ist von Bedeutung, da mittels des Klauengreifers 16 sowohl das Fräswerkzeug 5 als auch das Kabel 8 des Fräswerkzeugs 5 zuverlässig und mit hinreichender Greifkraft zu ergreifen sind.

## Patentansprüche

1. Kanalsanierungsverfahren, wobei
- ein Sanierungswerkzeug (5) mittels eines in einer Hauptleitung (3) eines Abwasserkanalsystems verfahrbaren Roboters (2) in eine in die Hauptleitung (3) einmündende Hausanschlussleitung (9) eingebracht wird,
- mittels des Sanierungswerkzeugs (5) Sanierungsarbeiten in der Hausanschlussleitung (9) durchgeführt werden, und
- das Sanierungswerkzeug (5) nach Abschluss der Sanierungsarbeiten mittels des Roboters (2) aus der Hausanschlussleitung (9) wieder entfernt wird,
wobei der Roboter (2) ein fernsteuerbares Greiforgan (4) zur Aufnahme des Sanierungswerkzeugs (5) aufweist, wobei der Roboter (2) und das Sanierungswerkzeug (5) über separate Kabel (6, 8) von über Tage her mit Energie versorgt und ferngesteuert werden, wobei der Roboter (2)
- das Sanierungswerkzeug (5) durch das fernsteuerbare Greiforgan (4) aufnimmt und durch die Hauptleitung (3) bis zur Einmündung der Hausanschlussleitung (9) transportiert,
- das Sanierungswerkzeug (5) in die Hausanschlussleitung (9) einführt und dort absetzt,
- das Sanierungswerkzeug (5) in der Hausanschlussleitung (9) zu einer schadhaften Stelle (10) vorschiebt, indem er nach dem Absetzen des Sanierungswerkzeugs (5) in der Hauptleitung (3) zurückfährt, dann das Kabel (8) des Sanierungswerkzeugs (5) ergreift und schließlich in der Hauptleitung (3) wieder vorfährt, und
- das Sanierungswerkzeug (5) nach Abschluss der Sanierungsarbeiten aus der Hausanschlussleitung (9) zurückzieht und wieder aufnimmt.

2. Kanalsanierungsverfahren nach Anspruch 1, **dadurch gekennzeichnet, dass** der Roboter (2) das Sanierungswerkzeug (5) wenigstens 50 cm weit, vorzugsweise wenigstens 1 m weit, besonders bevorzugt wenigstens 2 m weit in die Hausanschlussleitung (9) einführt, bevor er es dort absetzt.

3. Kanalsanierungssystem mit einem in einer Hauptleitung (3) eines Abwasserkanalsystems verfahrbaren Roboter (2) und einem in eine Hausanschlussleitung (9) einführbaren Sanierungswerkzeug (5),
wobei der Roboter (2) ein fernsteuerbares Greiforgan (4) aufweist, mit dem das Sanierungswerkzeug (5) ergreifbar ist, wobei ein Kabel (8) des Sanierungswerkzeugs (5) durch das fernsteuerbare Greiforgan (4) ergreifbar ist, wobei das Kabel (8) des Sanierungswerkzeugs (5) biegesteif ist und das Kanalsanierungssystem so ausgebildet ist, dass das Kabel (8) einen von dem Roboter (2) auf das Kabel ausgeübten Schub auf das Sanierungswerkzeug (5) überträgt, wobei das Greiforgan (4) einen Klauengreifer (16) aufweist, mit aufeinander zu und voneinander weg beweglichen Greifklauen (18, 19), wobei der Klauengreifer (16) zwei ineinander verschränkbare Gruppen von Greifklauen (18, 19) aufweist, wobei wenigstens eine der Gruppen wenigstens zwei Greifklauen umfasst.

4. Kanalsanierungssystem nach Anspruch 3, **dadurch gekennzeichnet, dass** der Roboter (2) und das Sanierungswerkzeug (5) über separate Kabel (6, 8) mit Energie versorgbar und fernsteuerbar sind.

5. Kanalsanierungssystem nach Anspruch 4, **gekennzeichnet durch** eine Kabelführung (17), die das Kabel (8) des Sanierungswerkzeugs (5) an dem Roboter (2) führt.

6. Kanalsanierungssystem nach einem der Ansprüche 3 bis 5, **dadurch gekennzeichnet, dass** der Roboter (2) und das Sanierungswerkzeug (5) jeweils eine Videokamera aufweisen.

## Claims

1. Sewer rehabilitation method, wherein
- a rehabilitation tool (5) by means of a robot (2) that is repositionable in a main line (3) of a waste water sewer system is moved into a domestic connector line (9) that opens into the main line (3) ;
- rehabilitation works are carried out in the domestic connector line (9) by means of the rehabilitation tool (5); and
- the rehabilitation tool (5) upon completion of the rehabilitation works is removed again from the domestic connector line (9) by means of the robot (2);
wherein the robot (2) has a remote-control-capable gripping member (4) for receiving the rehabilitation tool (5), wherein the robot (2) and the rehabilitation tool (5) are supplied with power and remote-controlled from above ground by way of separate cables (6, 8), wherein the robot (2)
- by way of the remote-control capable gripping member (4) receives and transports the rehabilitation tool (5) through the main line (3) up to the mouth of the domestic connector line (9) ;
- introduces the rehabilitation tool (5) into the domestic connector line (9) and sets said rehabilitation tool (5) down in the latter;
- in the domestic connector line (9) pushes forward the rehabilitation tool (5) up to a defective location (10) in that said robot (2), upon setting down the rehabilitation tool (5), reverses in the main line (3), then acquires the cable (8) of the rehabilitation tool (5), and finally advances again in the main line (3); and
- retracts the rehabilitation tool (5) from the domestic connector line (9) upon completion of the rehabilitation works and receives said rehabilitation tool (5) again.

2. Sewer rehabilitation method according to Claim 1, **characterized in that** the robot (2) introduces the rehabilitation tool (5) into the domestic connector line (9) by at least 50 cm, preferably at least 1 m, particularly preferably by at least 2 m, before setting down said rehabilitation tool (5) therein.

3. Sewer rehabilitation system, having a robot (2) that is repositionable in a main line (3) of a waste water sewer system, and a rehabilitation tool (5) that is introducible into a domestic connector line (9),
wherein the robot (2) has a remote-control-capable gripping member (4) by way of which the rehabilitation tool (5) is acquirable, wherein a cable (8) of the rehabilitation tool (5) is acquirable by the remote-control-capable gripping member (4), wherein the cable (8) of the rehabilitation tool (5) is flexurally rigid, and the sewer rehabilitation system is configured such that the cable (8) transmits a thrust exerted by the robot (2) on the cable to the rehabilitation tool (5), wherein the gripping member (4) has a jaw gripper (16) having convergeable and divergeable gripping jaws (18, 19), wherein the jaw gripper (16) has two mutually interlockable groups of gripping jaws (18, 19), wherein at least one of the groups comprises at least two gripping jaws.

4. Sewer rehabilitation system according to Claim 3, **characterized in that** the robot (2) and the rehabilitation tool (5) are capable of being supplied with power and remote-controlled by way of separate cables (6, 8).

5. Sewer rehabilitation system according to Claim 4, **characterized by** a cable routing (17) which guides the cable (P) of the rehabilitation tool (5) on the robot (2).

6. Sewer rehabilitation system according to one of Claims 3 to 5, **characterized in that** the robot (2) and the rehabilitation tool (5) have in each case one video camera.

## Revendications

1. Procédé de traitement de canalisation,
- un outil de réparation (5) étant introduit dans une conduite de raccordement domestique (9), qui débouche dans la conduite principale (3), au moyen d'un robot (2) pouvant être déplacé dans une conduite principale (3) d'un système de canalisation d'eaux usées,
- les travaux de réparation étant effectués dans la conduite de raccordement domestique (9) au moyen de l'outil de réparation (5), et
- l'outil de réparation (5) étant retiré de la conduite de raccordement domestique (9) au moyen du robot (2) une fois que les travaux de réparation sont terminés,
le robot (2) comportant un élément de préhension télécommandable (4) destiné à prendre l'outil de réparation (5), le robot (2) et l'outil de réparation (5) étant alimentés en énergie et télécommandés au jour le jour par le biais de câbles séparés (6, 8), le robot (2)
- prenant l'outil de réparation (5) par le biais de l'élément de préhension télécommandable (4) et étant transporté à travers la conduite principale (3) jusqu'à l'embouchure de la conduite de raccordement domestique (9),
- introduisant l'outil de réparation (5) dans la conduite de raccordement domestique (9) où il le pose,
- avançant l'outil de réparation (5) dans la conduite de raccordement domestique (9) vers un endroit endommagé (10) en ce qu'il recule après avoir posé l'outil de réparation (5) dans la conduite principale (3), puis saisit le câble (8) de l'outil de réparation (5) et enfin avance de nouveau dans la conduite principale (3), et
- retirant l'outil de réparation (5) de la conduite de raccordement domestique (9) une fois que les travaux d'assainissement sont terminés et le reprenant.

2. Procédé de traitement de canalisation selon la revendication 1, **caractérisé en ce que** le robot (2) introduit l'outil de réparation (5) sur au moins 50 cm, de préférence sur au moins 1 m, de manière particulièrement préférée sur au moins 2 m, dans la conduite de raccordement domestique (9) avant de le poser.

3. Système de traitement de canalisation comprenant un robot (2) pouvant être déplacé dans une conduite principale (3) d'un système de canalisation d'eaux usées et un outil de réparation (5) pouvant être introduit dans une conduite de raccordement domestique (9),
le robot (2) comportant un élément de préhension télécommandable (4) au moyen duquel l'outil de réparation (5) peut être saisi, un câble (8) de l'outil de réparation (5) pouvant être saisi par l'élément de préhension télécommandable (4), le câble (8) de l'outil de réparation (5) étant rigide en flexion et le système de traitement de canalisation étant conçu de telle sorte que le câble (8) transmette à l'outil de réparation (5) une poussée exercée sur le câble par le robot (2), l'élément de préhension (4) comportant une pince à griffes (16) pourvues de griffes de préhension (18, 19) pouvant être rapprochées et écartées les unes des autres, la pince à griffes (16) comportant deux groupes de griffes de préhension (18, 19) qui peuvent s'entrecroiser, au moins un des groupes comportant au moins deux griffes de préhension.

4. Système de traitement de canalisation selon la revendication 3, **caractérisé en ce que** le robot (2) et l'outil de réparation (5) peuvent être alimentés en énergie et télécommandés par le biais de câbles séparés (6, 8).

5. Système de traitement de canalisation selon la revendication 4, **caractérisé par** un guide-câble (17) qui guide le câble (8) de l'outil de réparation (5) au niveau du robot (2).

6. Système de traitement de canalisation selon l'une des revendications 3 à 5, **caractérisé en ce que** le robot (2) et l'outil de réparation (5) comportent chacun une caméra vidéo.
